# EUROPEAN PATENT SPECIFICATION

(11) **EP 1 833 691 B1**
(45) Date of publication and mention of the grant of the patent: **21.03.2012**
(21) Application number: 05813453.7
(22) Date of filing: 08.12.2005
(51) Int. Cl.: B60G 17/017

(54) **INFORMATION BASED CONTROLLING OF CHASSIS HEIGHT OF A VEHICLE**
AUF INFORMATIONEN BASIERENDE STEUERUNG DER KAROSSERIEHÖHE EINES FAHRZEUGS
REGLAGE DE LA HAUTEUR DE CHASSIS D'UN VEHICULE A PARTIR D'INFORMATIONS

(30) Priority: 30.12.2004 SE 0403224
(43) Date of publication of application: 19.09.2007
(73) Proprietor: VOLVO LASTVAGNAR AB, 405 08 Göteborg (SE)
(72) Inventor: LARSSON, Mikael, S-431 44 Mölndal (SE); OSCARSSON, Christian, S-471 60 Myggenäs (SE)
(74) Representative: Fröhling, Werner Otto
(86) International application number: PCT/SE2005/001860
(87) International publication number: WO 2006/071169

(56) References cited:
- EP-A- 1 449 688
- EP-A- 1 479 544
- EP-A2- 1 228 905
- JP-A- 61 241 210
- US-A- 3 765 692
- US-A- 5 661 465

## Description

The present invention relates to a system for controlling the height of the chassis on a heavy vehicle, and in particular automatic controlling of the height based on information about i.e. the position of the vehicle, as per the preamble of claims 1 and 12. An example of such a system is disclosed in EP-A-1 479 544.

### Background of the invention

The present invention relates to a method of adjusting the chassis height of vehicles, such as lorries with or without trailers, buses and other heavy vehicles, which include height adjusting devices, such as hydraulic or pneumatic suspension systems, for adjusting the chassis height.

The present invention is based on the finding that it is less time consuming and less fuel consuming, if the chassis heights are adjusted automatically for specific foreseen locations.

The chassis height of vehicles, in particular lorries, is often changed depending on the location of the vehicle. If for example the lorry is to be loaded or unloaded with goods, the chassis height is lowered or raised to the specific height corresponding to the height of the loading platform, and when the vehicle leaves the loading area, the chassis height is raised or lowered again to resume the proper driving height. If the vehicle later enters the motorway the chassis height must preferably be lowered in order to decrease the air resistance and thus decrease the fuel consumption. In such cases it will be less time consuming for the driver, if the chassis can be adjusted automatically based on the location of the vehicle, such that the chassis for example is adjusted to the height of the loading platform just before the vehicle enters the platform, or such that the chassis is lowered automatically when the vehicle enters the motorway in order to save fuel.

Today chassis height adjustment is controlled manually by the driver. It is known to have push-buttons in the drivers cabin having pre-set values for the chassis height, but these must be activated manually by the driver and thus not activated if the driver forgets to push the button, and often it only allows for two or three pre-set height values.

EP-A-1479544 discloses a position dependent height adjustment of a vehicle for automatically adjusting the chassis height of a vehicle, employing a method operating height adjusting devices for adjusting the chassis height in relation to one or more axles of the vehicle from a first height level to second height level. The operation of height adjusting devices is controlled by positioning and/or condition identification means so as to move the chassis from said first to said second height level in response to receiving from the position identification means an indication to the effect that the vehicle is approaching or has arrived at one of a plurality of predetermined positions (9) and/or positions fulfilling predetermined criteria. The position identification means comprises a global navigation system.

The present invention provides a method and system for automatically adjusting the chassis height of the vehicle based on information of at least the position of the vehicle.

### Disclosure of the invention

Thus, the present invention provides a method of operating a vehicle system for automatically adjusting the chassis height of a vehicle according to claim 1.

The chassis can be adjusted both upwards and downwards so the first height level may be lower or higher than said second height level, the operation of the height adjusting devices being controlled so as to move the chassis, when the position identification means identifies positions where a specific chassis height may be foreseen. The chassis front end respectively rear end can also be adjusted individually both upwards and downwards in order to adjust the inclination of the vehicle.

The height adjusting devices preferably forms part of the suspension system on the vehicle and comprise hydraulic or pneumatic adjusting devices. Thus, one or more fluid suppliers, preferably power driven air compressors or hydraulic pumps, supplies or removes fluid to/from said adjusting devices, and the operation of said one or more suppliers is controlled so as to supply or remove fluid to/from the adjusting device so as to lower or lift the chassis or adjust the inclination of the vehicle, when the position identification means identifies positions where a specific chassis height and/or inclination may be foreseen.

Alternatively, the height adjusting devices may comprise mechanical means for adjusting the height, such as arrangements with power driven screw spindles.

The vehicle system may be installed in a vehicle travelling regularly on a known route, said predetermined positions being selected based on experience and drive pattern recognition. As an example, a plurality of plots of the preferred chassis heights against the position along the route at different times of the day may be stored and used as a reference. Based on such experience and on the actual position of the vehicle, the chassis height level may be decided. For example data relating to heights of specific loading platforms may be stored in the vehicle system and used later on. If a lorry enters a loading area, the system will automatically adjust the chassis height and/or inclination so that the loading height of the trailer corresponds to the height of the loading platform.

The position identification means may be of any suitable kind being able to indicate when the vehicle is approaching or has arrived at one of a plurality of predetermined positions and/or positions where a specific chassis height may be expected. The indication received from the position indication means may, for example, be based on map data and other information about road topology (curves, road slopes, crossroads, tunnels), drive pattern recognition, traffic information from external sources, sensors located on the vehicle and/or special signals generated by external sources. The information may be received by and processed in an electronic processing system, and based on predetermined criteria this processing system may determine when the height of the chassis has to be changed.

In order to obtain the optimal chassis height during driving, the operation of the height adjusting devices or fluid suppliers may further be controlled based on the drivers preferred driving conditions, the type and amount of goods transported by the vehicle and/or the amount of fuel in the fuel tank.

The predetermined positions may comprise specific locations used for loading and/or unloading lorries and/or trailers or for coupling or uncoupling the trailer from the lorry where the chassis height must be adjusted, beginnings and ends of motorways, highways, streets, entrances and exits of loading areas and ferry terminals. Thus, when the vehicle e.g. enters the motorway or highway, the chassis height is adjusted downwards for lowering the chassis height in order to obtain better driving conditions and less fuel consumption, and when leaving the motorway or highway and e.g. entering a city or a ferry terminal the chassis is raised. Such "predetermined positions" may be defined by wireless position indicators, which may be arranged at suitable place at a certain distance in advance of such predetermined position, and which may be detected by a position detector installed in the vehicle.

The wireless position indicator may, for example, be a transponder transceiver and the position detector installed in the vehicle may be a transponding positioning receiver.

However, according to the invention, the position identification means comprises a global navigation system (GPS, Global Positioning System) which may communicate with a receiver installed in the vehicle, and the operation of the adjusting devices may then be controlled based on the position indication received from the navigation system combined with information about the various positions stored.

Due to safety reasons, the operation of the height adjusting devices is further based on information from velocity determining means determining the velocity of the vehicle. According to the invention, the chassis height can only be adjusted within a narrow height range in relation to a neutral chassis height position when the vehicle is driving at a higher speed, e.g. above 10 km/h or 30 km/h. The chassis height can be adjusted in a wider height range when the vehicle is driving at a lower speed, e.g below 10 km/h or 30 km/h. Preferably, the system is adapted to adjust the chassis height within a range of preferably ± 40 mm (meaning 40 mm upwards or downwards) from a predetermined neutral chassis height position (middle position) at any vehicle velocity, and to adjust the chassis height within a range of preferably plus 200 mm to minus 90 mm from said predetermined neutral chassis height position only at vehicle velocities being at the most e.g. 10 or 30 km/h.

The system may further comprise means for measuring the distance between the lowest part of the chassis and the ground, such that the chassis automatically can be raised in case the vehicle enters unforeseen areas or conditions, such as roads with very soft surface where the wheels dig into the ground.

According to a second aspect, the present invention relates to a vehicle according to claim 12.

The height adjusting devices preferably comprise hydraulic or pneumatic adjusting devices operated by one or more fluid suppliers, preferably air compressors or hydraulic pumps, supplying or removing fluid to/from said adjusting devices, the operation of said one or more suppliers being controlled so as to supply or remove fluid to/from the adjusting device so as to move the chassis, when the position identification means identifies positions where a specific chassis height may be foreseen.

The control device may comprise a wireless receiver for communicating with a transmitter/receiver positioned in other vehicles and/or stationary units.

The vehicle may travel regularly on a known route, and said predetermined positions may then be selected based on experience. Said predetermined positions may be defined by wireless position indicators, such as transponder transceivers, positioned at or adjacent to said predetermined positions and which can be detected by a position detector installed in the, such as a transponding positioning receiver, adapted to communicate with the wireless position indicators.

However, according to the invention, the position identification means comprises a global navigation system which may communicate with a receiver installed in the vehicle, and the operation of adjusting devices and/or the fluid supplier(s) may then be controlled based on the position indication received from the navigation system combined with information about the various positions stored, such as map data, information about topology, and combined with information about the preferred chassis heights at the positions.

The chassis height may also be dependent on the total axle load weight. Lower chassis height is needed when the vehicle, such as a lorry or truck, is empty than when it is fully loaded. Therefore, the vehicle preferably may include weight determining means, such as weight sensors or air bellow pressure sensors, for indicating the load weight. Such information about the load situation may be taken into consideration when controlling the operation of the chassis height adjusting devices/fluid suppliers.

The chassis height may also automatically be controlled by road information based on height limitations, as for example, low bridges, tunnels, construction sites, ferry ramps etc. Also clearance measuring devices, e.g. a device measuring the height of a bridge or the distance from the vehicle roof to a ceiling, can be used for controlling the vehicle height automatically. In this case, the vehicle can be lowered as much as possible in order to avoid, or at least to limit, damages caused be e.g. a low bridge.

It should be understood that in case the vehicle is a lorry with trailer, the chassis height of both the lorry and the trailer may be adjusted.

### Brief description of the figures

The invention will now be further described with reference to the figures, wherein
Fig. 1 is a side view showing a lorry with adjustable chassis height,
Fig. 2 is a perspective view of a lorry with height adjusting devices in the form of air bellows, and
Fig. 3 is a side view showing a lorry approaching a predetermined position.

### Description of the invention

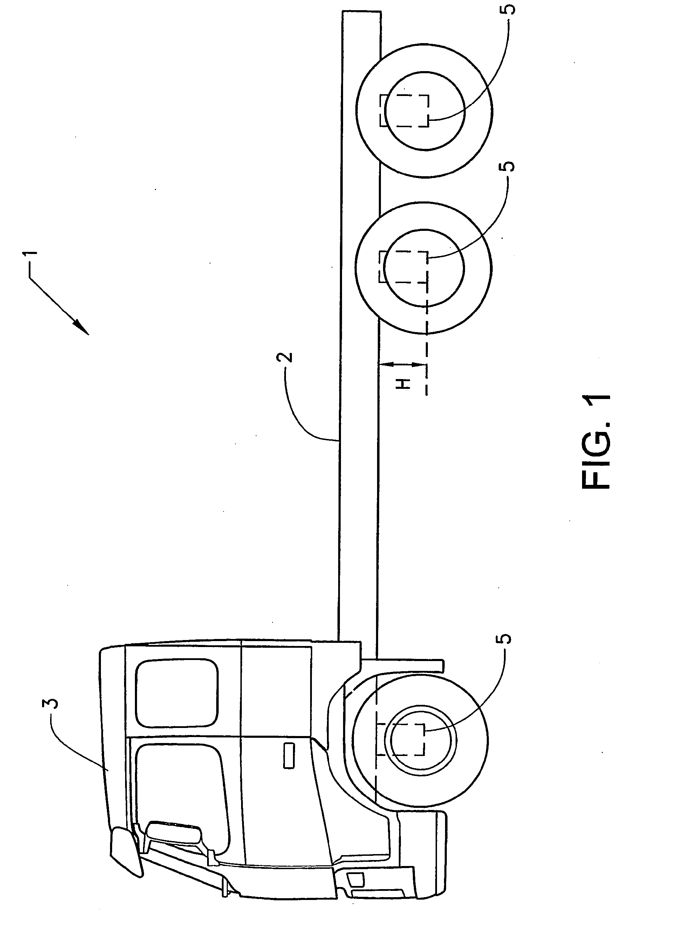

Fig. 1 illustrates a lorry 1 with a chassis 2 and a driver's cab 3 comprising a system according to the invention for automatically adjusting the chassis height (H) in relation to the axles by means of height adjusting devices 5.

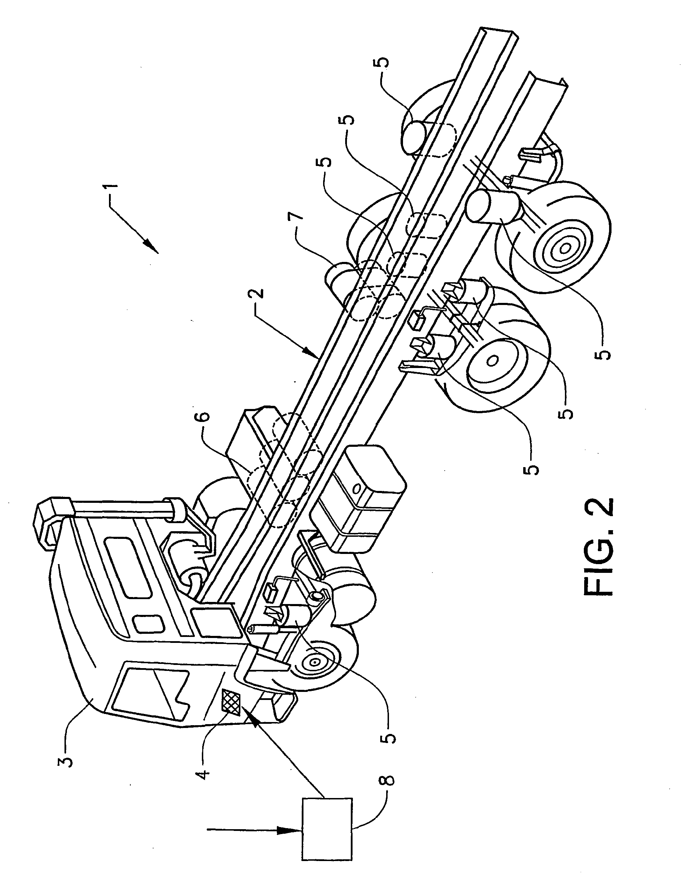

Fig. 2 is a perspective view showing a chassis 2 and the driver's cab 3 of a conventional lorry 1. The lorry 1 comprises a power driven air compressor 4 supplying air through storage tanks 6, 7 to a plurality of height adjusting air bellows 5 for adjusting the chassis height.
   In this embodiment, the operation of the air suppliers 4, 6, 7 is controlled by an electronic control device 8 which may receive control signals from internal or external sources. When the chassis height is to be adjusted when a predetermined position is foreseen by the internal or external sources, a signal may be transmitted to the control device 8, which may then cause air to be supplied to or removed from the air bellows 5 depending on whether the chassis must be raised or lowered.

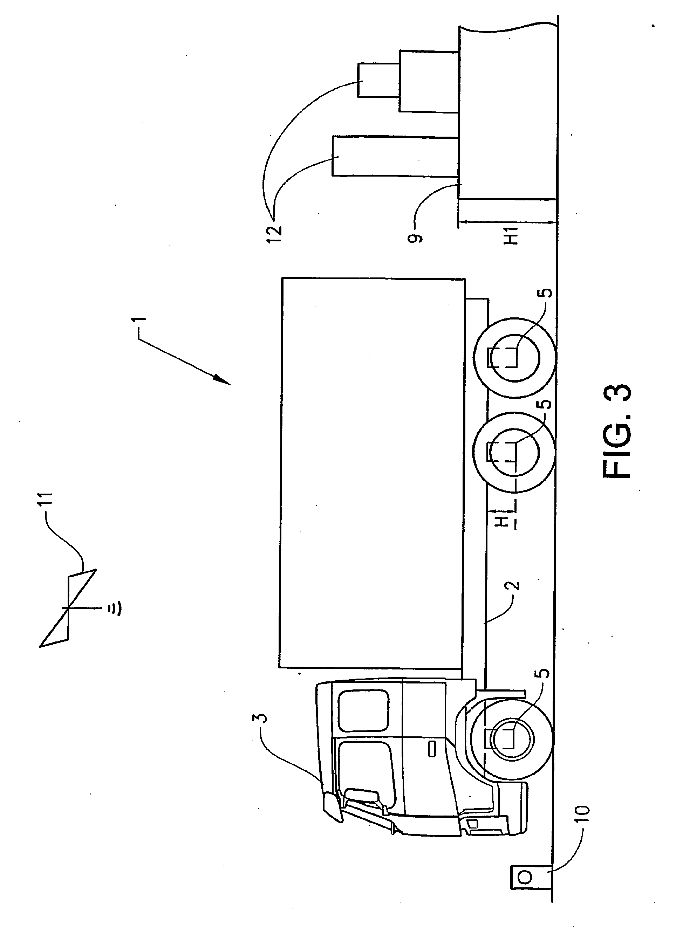

Fig. 3 illustrates a situation where a lorry 1 is approaching a loading platform 9 for loading goods 12 onto the lorry. In this case wireless position indicators, such as transponder transceivers 10 may be arranged along the sides of the lane to the platform or even prior to entering the loading area, and the control device 8 may comprise a wireless position detector, such a transponding position receiver. When the position detector of the control device receives a signal from the position indicators 10 indicating that the vehicle is approaching the loading platform 9 the control device 8 causes the air to be supplied to the height adjusting devices 5 in order to adjust the chassis height (H) so that the loading height of the trailer substantially corresponds to the height (H1) of to the loading platform 9. At the same time, the inclination of the vehicle may be adjusted in order to compensate for e.g. a sloping ground.

Additionally the control device 8 receives position data from satellites 11 of a global navigation system and combined with map information or topology data stored therein the control devices may decide to instruct the system to supply or remove air from the bellows 5.

It should be understood that numerous modifications and changes of the embodiments described above may be made within the scope of the appended claims. As an example the control device may receive signals from other kinds of external or internal signal sources than those described, such as video cameras, radar systems etc.

## Claims

1. A method of operating a vehicle system for automatically adjusting the chassis height (H) of a vehicle (1), the method comprising:
- operating height adjusting devices (5) for adjusting the chassis height (H) in relation to one or more axles of the vehicle (1) from a first height level to second height level,
wherein- the operation of height adjusting devices (5) is controlled by positioning and/or condition identification means (10, 11) so as to move the chassis (2) from said first to said second height level in response to receiving from the position identification means (10, 11) an indication to the effect that the vehicle (1) is approaching or has arrived at one of a plurality of predetermined positions (9) and/or positions fulfilling predetermined criteria,
- and wherein the position identification means comprises a global navigation system (11),
**characterized in that**
a vehicle system is adapted to adjust the chassis height (H) in a narrow height range when the vehicle is driving at a higher speed and in a wider height range when the vehicle is driving at a lower speed.

2. A method according to claim 1, wherein the height adjusting devices (5) comprise hydraulic or pneumatic adjusting devices (5), and wherein one or more fluid suppliers (4, 6, 7) supplies or removes fluid to/from said adjusting devices (5), the operation of said one or more suppliers being controlled so as to supply or remove fluid to/from the adjusting device (5) so as to move the chassis (2), when the position identification means (10, 11) identifies positions (9) where a specific chassis height (H) may be foreseen.

3. A method according to claim 1 or 2, wherein the vehicle system is installed in a vehicle traveling on a known route, said predetermined positions (9) being selected based on experience.

4. A method according to any of the claims 1-3, wherein said predetermined positions (9) are defined by wireless position indicators (10) to be detected by a position detector installed in the vehicle (1).

5. A method according to any of the claims 1-4, wherein said predetermined positions comprise beginnings and ends of motorways, of highways, of streets, entrances and exits of loading areas and ferry terminals.

6. A method according to any of the claims 1-5, wherein said predetermined criteria comprises off road areas, rugged terrain, motorways or streets.

7. A method according to any of claims 1-6, wherein the operation of the height adjusting devices (5) further is based on information from velocity determining means determining the velocity of the vehicle.

8. A method according to claim 7, wherein the system is adapted to;
- adjust the chassis height (H) within a first range from a predetermined neutral chassis height position at a vehicle velocity above a predetermined velocity, and
- adjust the chassis height (H) within a second range from said predetermined neutral chassis height position at a vehicle velocity below said predetermined velocity.

9. A method according to claim 8, wherein the predetermined velocity is 10 km/h.

10. A method according to claim 8 or 9, wherein the first range is in the order of ± 40 mm and the second range is in the order of plus 200 mm to minus 90 mm.

11. A method according to any of claims 1-10, wherein the operation of height adjusting devices (5) further is controlled based on drive pattern recognition, traffic information, the drivers preferred driving conditions, the type and amount of goods transported by the vehicle, the amount of fuel in the fuel tank and/or the recognised traffic or road conditions.

12. A vehicle (1) comprising;
- height adjusting devices (5) for adjusting the height (H) of the chassis (2) in relation to one or more axles of the vehicle (1),
- height controlling means for controlling the height of the chassis (2) in relation to the 30 one or more axles, and
- position identification means (10, 11) for determining the position of the vehicle, **characterised in**
- a control device (8) communicating with the position identification means (10, 11), so as to change the level of the height of the chassis (2) from a first to a second height level in response to receiving from the position identification means (10, 11) an indication to the effect that the vehicle (1) is approaching or has arrived at one of a plurality of predetermined positions (9) and/or positions fulfilling predetermined criteria,
- wherein the position identification means comprises a global navigation system (11),
**characterized in that**
a vehicle system is adapted to adjust the chassis height (H) in a narrow height range when the vehicle is driving at a higher speed and in a wider height range when the vehicle is driving at a lower speed.

13. A vehicle according to claim 12, wherein the height adjusting devices (5) comprise 5 hydraulic or pneumatic adjusting devices (5), the vehicle comprising one or more fluid suppliers (4, 6, 7) to supply or remove fluid to/from said adjusting devices (5), the operation of said one or more suppliers being controlled so as to supply or remove fluid to/from the adjusting device so as to move the chassis (2), when the position identification means (10, 11) identifies positions (9) where a specific chassis height may be foreseen.

14. A vehicle according to claim 12 or 13, wherein the control device (8) comprises a wireless receiver for communicating with:
- a global navigation system (11) and/or
- transmitter/receiver positioned in other vehicles and/or
- stationary units (10).

15. A vehicle according to any of the claims 12-14, the vehicle (1) travelling on a known route, said predetermined positions (9) being selected based on experience.

16. A vehicle according to any of the claims 12-15, wherein said predetermined positions (9) are defined by wireless position indicators (10) detected by a position detector installed in the vehicle.

17. A vehicle according to any of claims 12-16, wherein the control device (8) comprises a wireless position detector, such as a transponding positioning receiver, adapted to communicate with wireless position indicators, such as transponder transceivers, positioned at or adjacent to said predetermined positions.

18. A vehicle according to any of claims 12-17, wherein the height adjusting devices (5) forms part of the suspension system on the vehicle.

19. A vehicle according to any of the claims 12-18, further comprising vehicle velocity determining means communicating with the control device (8) so as to inform about the velocity of the vehicle, the control device (8) being adapted to take such information in consideration when controlling the operation of the height adjusting devices (5).

20. A vehicle (1) comprising a vehicle system according to any of claims 1-11.

## Patentansprüche

1. Verfahren zum Betrieb eines Fahrzeugsystems zur automatischen Einstellung der Chassishöhe (H) eines Fahrzeugs (1), wobei das Verfahren umfasst:
- den Betrieb von Höheneinstellvorrichtungen (5) zur Einstellung der Chassishöhe (H) bezüglich einer oder mehrerer Achsen des Fahrzeugs (1) von einem ersten Höhenniveau auf ein zweites Höhenniveau,
- wobei der Betrieb der Höheneinstellvorrichtungen (5) durch Positionier- und/oder Zustandsidentifikationseinrichtungen (10, 11) gesteuert wird, um das Chassis (2) von dem ersten auf das zweite Höhenniveau in Ansprechung auf den Empfang einer Meldung von der Positionsidentifikationseinrichtung (10, 11) zu bewegen, dass das Fahrzeug (1) sich einer von einer Vielzahl von vorherbestimmten Positionen (9) nähert oder an dieser angekommen ist und/oder Positionen vorherbestimmte Kriterien erfüllen,
- und wobei die Positionsidentifikationseinrichtung ein globales Navigationssystem (11) umfasst,
**dadurch gekennzeichnet, dass**
ein Fahrzeugsystem so ausgelegt ist, dass es die Chassishöhe (H) in einem engen Höhenbereich einstellt, wenn das Fahrzeug mit einer hohen Geschwindigkeit fährt, und in einem breiteren Höhenbereich einstellt, wenn das Fahrzeug mit einer geringeren Geschwindigkeit gefahren wird.

2. Verfahren nach Anspruch 1, wobei die Höheneinstellvorrichtungen (5) hydraulische oder pneumatische Einstellvorrichtungen (5) umfassen, und wobei eine oder mehrere Fluidzuführeinrichtungen (4, 6, 7) den Einstellvorrichtungen (5) Fluid zuführt oder von diesen entfernt, wobei der Betrieb der einen oder mehreren Zuführeinrichtungen so gesteuert wird, dass Fluid den Einstellvorrichtungen (5) zugeführt oder von diesen entfernt wird, um das Chassis (2) zu bewegen, wenn die Positionsidentifikationseinrichtung (10, 11) Positionen (9) identifiziert, an denen eine bestimmte Chassishöhe (H) vorgesehen werden kann.

3. Verfahren nach Anspruch 1 oder 2, bei dem das Fahrzeugsystem in einem auf einer bekannten Route fahrenden Fahrzeug installiert ist, wobei die vorherbestimmten Positionen (9) auf der Basis von Erfahrung gewählt sind.

4. Verfahren nach einem der Ansprüche 1 bis 3, bei dem die vorherbestimmten Positionen (9) durch drahtlose Positionsmelder (10) definiert werden, die von einer in dem Fahrzeug (1) untergebrachten Erfassungsseinrichtung erfasst werden.

5. Verfahren nach einem der Ansprüche 1 bis 4, bei dem die vorherbestimmten Positionen den Anfang und das Ende von Autobahnen, Schnellstraßen, Straßen, Einfahrten und Ausfahrten von Ladebereichen und Fährenterminals umfassen.

6. Verfahren nach einem der Ansprüche 1 bis 5, bei dem die vorherbestimmten Kriterien Geländebereiche, holpriges Terrain, Autobahnen oder Straßen umfassen.

7. Verfahren nach einem der Ansprüche 1 bis 6, bei dem der Betrieb der Höheneinstellvorrichtungen (5) außerdem auf Informationen von Geschwindigkeitsbestimmungseinrichtungen basiert, die die Geschwindigkeit des Fahrzeugs bestimmen.

8. Verfahren nach Anspruch 7, wobei das System ausgelegt ist, um
- die Chassishöhe (H) innerhalb eines ersten Bereichs von einer vorherbestimmten neutralen Chassishöhenposition bei einer Fahrzeuggeschwindigkeit einzustellen, die oberhalb einer vorherbestimmten Geschwindigkeit liegt, und
- die Chassishöhe (H) innerhalb eines zweiten Bereichs von der vorherbestimmten neutralen Chassishöhenposition bei einer Fahrzeuggeschwindigkeit einzustellen, die unterhalb der vorherbestimmten Geschwindigkeit liegt.

9. Verfahren nach Anspruch 8, wobei die vorherbestimmte Geschwindigkeit 10 km/h beträgt.

10. Verfahren nach Anspruch 8 oder 9, wobei der erste Bereich in der Größenordnung von ± 40 mm und der zweite Bereich in der Größenordnung von +200 mm bis -90 mm liegt.

11. Verfahren nach einem der Ansprüche 1 bis 10, wobei der Betrieb der Höheneinstellvorrichtungen (5) außerdem auf der Basis einer Fahrmustererkennung, von Verkehrsinformationen, von von dem Fahrer bevorzugten Fahrbedingungen, der Art und der Menge von durch das Fahrzeug transportierten Waren, der Kraftstoffmenge in dem Kraftstofftank und/oder der erkannten Verkehrs- oder Straßenbedingungen gesteuert wird.

12. Fahrzeug (1) mit
- Höheneinstellvorrichtungen (5) zur Einstellung der Höhe (H) des Chassis (2) bezüglich einer oder mehrerer Achsen des Fahrzeugs (1),
- einer Höhensteuereinrichtung zur Steuerung der Höhe des Chassis (2) bezüglich der einen oder mehreren Achsen,
- einer Positionsidentifikationseinrichtung (10, 11) zur Bestimmung der Position des Fahrzeugs, und
- einer Steuervorrichtung (8), die mit der
Positionsidentifikationseinrichtung (10, 11) kommuniziert, um das Niveau der Höhe des Chassis (2) von einem ersten auf ein zweites Höhenniveau in Ansprechung auf den Empfang einer Meldung von der Positionsidentifikationseinrichtung (10, 11) zu ändern, dass das Fahrzeug (1) sich an eine von einer Vielzahl von vorherbestimmten Positionen (9) annähert oder diese erreicht hat und/oder Positionen vorherbestimmte Kriterien erfüllten,
- wobei die Positionsidentifikationseinrichtung ein globales Navigationssystem (11) umfasst,
**dadurch gekennzeichnet, dass**
ein Fahrzeugsystem so ausgelegt ist, dass es die Chassishöhe (H) in einem engen Höhenbereich einstellt, wenn das Fahrzeug mit einer hohen Geschwindigkeit fährt, und in einem breiteren Höhenbereich einstellt, wenn das Fahrzeug mit einer geringeren Geschwindigkeit fährt.

13. Fahrzeug nach Anspruch 12, wobei die Höheneinstellvorrichtungen (5) hydraulische oder pneumatische Einstellvorrichtungen (5) umfassen, wobei das Fahrzeug für ein Zuführen von Fluid zu den Einstellvorrichtungen (5) oder ein Entfernen von Fluid von diesen eine oder mehrere Fluidzuführeinrichtungen (4, 6, 7) umfasst, wobei der Betrieb der einen oder mehreren Zuführeinrichtungen so gesteuert wird, dass Fluid der Einstellvorrichtung zugeführt oder von dieser entfernt wird, um das Chassis (2) zu bewegen, wenn die Positionsidentifikationseinrichtung (10, 11) Positionen (9) identifiziert, an denen eine bestimmte Chassishöhe (H) vorgesehen werden kann.

14. Fahrzeug nach Anspruch 12 oder 13, wobei die Steuervorrichtung (8) einen drahtlosen Empfänger zur Kommunikation mit
- einem globalen Navigationssystem (11) und/oder
- einem in anderen Fahrzeugen angeordneten Sender/Empfänger und/oder
- stationären Einheiten (10) umfasst.

15. Fahrzeug nach einem der Ansprüche 12 bis 14, wobei, wenn das Fahrzeug (1) auf einer bekannten Route fährt, die vorherbestimmten Positionen (9) auf der Basis von Erfahrung gewählt werden.

16. Fahrzeug nach einem der Ansprüche 12 bis 15, wobei die vorherbestimmten Positionen (9) durch drahtlose Positionsmelder (10) definiert werden, die durch eine Positionserfassungseinrichtung erfasst werden, die im Fahrzeug installiert ist.

17. Fahrzeug nach einem der Ansprüche 12 bis 16, wobei die Steuervorrichtung (8) eine drahtlose Positionserfassungseinrichtung, wie zum Beispiel einen Transponder-Positionsempfänger umfasst, der so ausgelegt ist, dass er mit drahtlosen Positionsmeldern, wie zum Beispiel Transponder-Sendeempfängern kommuniziert, die an oder angrenzend an die vorherbestimmten Positionen angeordnet sind.

18. Fahrzeug nach einem der Ansprüche 12 bis 17, wobei die Höheneinstellvorrichtungen (5) einen Teil des Aufhängungssystems des Fahrzeugs bilden.

19. Fahrzeug nach einem der Ansprüche 12 bis 18, das außerdem eine Fahrzeuggeschwindigkeitsbestimmungseinrichtung umfasst, die mit der Steuereinrichtung (8) kommuniziert, um über die Geschwindigkeit des Fahrzeugs zu informieren, wobei die Steuervorrichtung (8) so ausgelegt ist, dass sie solche Informationen berücksichtigt, wenn sie den Betrieb der Höheneinstellvorrichtungen (5) steuert.

20. Fahrzeug (1) mit einem Fahrzeugsystem nach einem der Ansprüche 1 bis 11.

## Revendications

1. Procédé d'actionnement d'un système de véhicule pour ajuster automatiquement la hauteur de châssis (H) d'un véhicule (1), le procédé comprenant les étapes consistant à :
actionner des dispositifs d'ajustement de hauteur (5) pour ajuster la hauteur de châssis (H) par rapport à un ou plusieurs essieux du véhicule (1) à partir d'un premier niveau de hauteur vers un second niveau de hauteur,
dans lequel l'actionnement des dispositifs d'ajustement de hauteur (5) est commandé par des moyens de positionnement et/ou d'identification de conditions (10, 11) de manière à déplacer le châssis (2) à partir du premier vers le second niveau de hauteur en réponse à la réception en provenance des moyens d'identification de position (10, 11) d'une indication concernant le fait que le véhicule (1) approche le niveau d'une position parmi une pluralité de positions prédéterminées (9) et/ou de positions remplissant des critères prédéterminés, ou y est arrivé,
et dans lequel les moyens d'identification de position comprennent un système de navigation globale (11),
**caractérisé en ce que**
le système de véhicule est adapté pour ajuster la hauteur de châssis (H) dans une plage de hauteur étroite lorsque que le véhicule circule à une vitesse plus élevée et dans une plage de hauteur plus large lorsque le véhicule circule à une vitesse plus faible.

2. Procédé selon la revendication 1, **caractérisé en ce que** les dispositifs d'ajustement de hauteur (5) comprennent des dispositifs d'ajustement hydrauliques ou pneumatiques (5), et un ou plusieurs dispositifs d'alimentation de fluide (4, 6, 7) alimentent ou enlèvent du fluide vers/à partir des dispositifs d'ajustement (5), l'actionnement des un ou plusieurs dispositifs d'alimentation étant commandé de manière à alimenter ou enlever du fluide vers/depuis le dispositif d'ajustement (5) de manière à déplacer le châssis (2), lorsque les moyens d'identification de position (10, 11) identifient des positions (9) où une hauteur de châssis spécifique (H) peut-être prévue.

3. Procédé selon la revendication 1 ou 2, **caractérisé en ce que** le système de véhicule est installé dans un véhicule se déplaçant sur une route connue, les positions prédéterminées (9) étant sélectionnés sur la base de l'expérience.

4. Procédé selon l'une quelconque des revendications 1 à 3, **caractérisé en ce que** les positions prédéterminées (9) sont définies par des indicateurs de position sans fil (10) détectés par un détecteur de position installé dans le véhicule (1).

5. Procédé selon l'une quelconque des revendications 1 à 4, **caractérisé en ce que** les positions prédéterminées comprennent des débuts et des fins de grandes routes, d'autoroutes, de rues, des entrées et sorties de zone de chargement et de terminaux portuaires.

6. Procédé selon l'une quelconque des revendications 1 à 5, **caractérisé en ce que** le critère prédéterminé comporte des zones en dehors de la route, un terrain accidenté, des autoroutes ou des rues.

7. Procédé selon l'une quelconque des revendications 1 à 6, **caractérisé en ce que** l'actionnement des dispositifs d'ajustement de hauteur (5) est en outre basé sur une information provenant de moyens de détermination de vitesse déterminant la vitesse du véhicule.

8. Procédé selon la revendication 7, **caractérisé en ce que** le système est adapté pour :
- ajuster la hauteur de châssis (H) dans une première plage à partir d'une position de hauteur de châssis neutre prédéterminée au niveau d'une vitesse véhicule au-dessus d'une vitesse déterminée, et
- ajuster la hauteur de châssis (H) dans une seconde plage à partir de la position de hauteur de châssis neutre prédéterminée à une vitesse de véhicule en dessous de la vitesse prédéterminée.

9. Procédé selon la revendication 8, **caractérisé en ce que** la vitesse prédéterminée est de 10 km/h.

10. Procédé selon la revendication 8 ou 9, **caractérisé en ce que** la première plage est de l'ordre de ± 40 mm et la seconde plage est de l'ordre de plus 200 à moins 90 mm.

11. Procédé selon l'une quelconque des revendications 1 à 10, **caractérisé en ce que** l'actionnement des dispositifs d'ajustement de hauteur (5) est en outre commandé sur la base de la reconnaissance d'un motif de conduite, d'informations de trafic, des conditions de conduite préférées des conducteurs, du type et de la quantité des marchandises transportées par le véhicule, de la quantité de carburant dans le réservoir de carburant et/ou des conditions de trafic ou de route reconnues.

12. Véhicule (1) comprenant :
- des dispositifs d'ajustement de hauteur (5) pour ajuster la hauteur (H) du châssis (2) par rapport à un ou plusieurs essieux du véhicule (1),
- des moyens de commande de hauteur pour commander la hauteur du châssis (2) par rapport aux un ou plusieurs essieux, et
- des moyens d'identification de position (10, 11) pour déterminer la position du véhicule, **caractérisé en ce que**
- un dispositif de commande (8) communiquent avec les moyens d'identification de position (10, 11), de manière à changer le niveau de la hauteur du châssis (2) à partir d'un premier vers une second niveau de hauteur en réponse à la réception en provenance des moyens d'identification de position (10, 11) d'une indication concernant le fait que le véhicule (1) s'approche de l'une d'une pluralité de positions prédéterminées, (9) et/ou de positions remplissant des critères prédéterminés, ou y est arrivé,
- les moyens d'identification de position comprenant un système de navigation globale (11),
**caractérisé en ce que**
un système de véhicule est adapté pour ajuster la hauteur de châssis (H) dans une plage de hauteur étroite lorsque le véhicule circule à une vitesse plus élevée et dans une plage de hauteur plus large lorsque le véhicule circule à une vitesse plus faible.

13. Véhicule selon la revendication 12, **caractérisé en ce que** les dispositifs d'ajustement de hauteur (5) comprennent des dispositifs d'ajustement hydrauliques ou pneumatiques (5), le véhicule comprenant un ou plusieurs dispositifs d'alimentation de fluide (4, 6, 7) pour alimenter ou enlever du fluide vers/depuis les dispositifs d'ajustement (5), l'actionnement des un ou plusieurs dispositifs d'alimentation étant commandé de manière à alimenter ou enlever du liquide vers/depuis le dispositif d'ajustement de manière à déplacer le châssis (2), lorsque les moyens d'identification de position (10, 11) identifient des positions (9) où une hauteur de châssis spécifique peut être prévue.

14. Véhicule selon la revendication 12 ou 13, **caractérisé en ce que** le dispositif de commande (8) comprend un émetteur récepteur sans fil pour communiquer avec :
- un système de navigation globale (11) et/ou
- un émetteur/récepteur positionné dans d'autres véhicules et/ou
- des unités stationnaires (10).

15. Véhicule selon l'une quelconque des revendications 12 à 14, **caractérisé en ce que** le véhicule (1) se déplace sur une route connue, les positions prédéterminées (9) étant sélectionnées sur la base de l'expérience.

16. Véhicule selon l'une quelconque des revendications 12 à 15, **caractérisé en ce que** les positions prédéterminées (9) sont définies par des indicateurs de position sans fil (10) détectés par un détecteur de position installée dans le véhicule.

17. Véhicule selon l'une quelconque des revendications 12 à 16, **caractérisé en ce que** le dispositif de commande (8) comprend un détecteur de position sans fil, tel qu'un récepteur de positionnement transpondant, adapté pour communiquer avec des indicateurs de position sans fil, tels que, des émetteurs récepteurs, positionnés au niveau des positions prédéterminées ou adjacents à celles-ci.

18. Véhicule selon l'une quelconque des revendications 12 à 17, **caractérisé en ce que** le dispositif d'ajustement de hauteur (5) forme une partie du système de suspension du véhicule.

19. Véhicule selon l'une quelconque des revendications 12 à 18, **caractérisé en ce qu'**il comprend de plus des moyens de détermination de la vitesse du véhicule communiquant avec le dispositif de commande (8) de manière à donner des informations concernant la vitesse du véhicule, le dispositif de commande (8) étant adapté pour prendre en considération ces informations lors de la commande de l'actionnement des dispositifs d'ajustement de hauteur (5).

20. Véhicule (1) comprenant un système de véhicule selon l'une quelconque des revendications 1 à 11. ;
